# FASCICULE DE BREVET EUROPEEN

(11) **EP 1 838 540 B1**
(45) Date de publication et mention de la délivrance du brevet: **11.03.2009**
(21) Numéro de dépôt: 05817507.6
(22) Date de dépôt: 06.12.2005
(51) Int. Cl.: B60C 15/024

(54) **PNEUMATIQUE DONT AU MOINS UN SIEGE DE BOURRELET COMPORTE UNE NERVURE**
REIFEN, VON DEM MINDESTENS EIN WULSTSITZ EINE RIPPE UMFASST
TYRE WHEREOF AT LEAST ONE BEAD SEAT COMPRISES A RIB

(30) Priorité: 24.12.2004 FR 0413956
(43) Date de publication de la demande: 03.10.2007
(73) Titulaire: Société de Technologie Michelin, 63000 Clermont-Ferrand (FR); Michelin Recherche et Technique S.A., 1763 Granges-Paccot (CH)
(72) Inventeur: JANIN, Nicolas, F-63200 RIOM (FR)
(74) Mandataire: Diernaz, Christian
(86) Numéro de dépôt international: PCT/EP2005/056513
(87) Numéro de publication internationale: WO 2006/069895

(56) Documents cités:
- EP-A- 0 774 368
- WO-A-00/06399
- US-A1- 2004 194 865
- PATENT ABSTRACTS OF JAPAN vol. 014, no. 567 (M-1059), 17 décembre 1990 (1990-12-17) & JP 02 241808 A (BRIDGESTONE CORP), 26 septembre 1990 (1990-09-26)

## Description

La présente invention concerne un pneumatique à armature de carcasse radiale destiné à être monté sur une jante dont au moins un siège est incliné vers l'extérieur et est prolongé axialement à l'extérieur par une saillie de faible hauteur. Elle concerne plus particulièrement les bourrelets d'un tel pneumatique, du type représenté par US 2004/0194865.

Un pneumatique comprenant des bourrelets destinés à être montés sur une jante dont au moins un siège est incliné vers l'extérieur est décrit par exemple dans la publication internationale WO 95/23073.

L'architecture, c'est-à-dire la structure, des bourrelets de tels ensembles pneumatiques est décrite dans la publication internationale WO 95/23073 et comprend en particulier une partie formant un "talon" prévu pour être situé axialement à l'intérieur du pneumatique et une pointe de bourrelet prévue pour être située axialement à l'extérieur lorsque le pneumatique est monté sur sa jante de montage. Le profil externe de chaque bourrelet comprend une succession de parties, à savoir un siège de bourrelet destiné à venir en contact avec un siège de jante et axialement à l'extérieur une partie latérale de bourrelet destinée à venir en contact contre une paroi latérale d'une saillie située axialement à l'extérieur dans le prolongement du siège de la jante.

Ce pneumatique comprend en outre une armature de carcasse dont les extrémités sont ancrées dans chaque bourrelet à un dispositif d'ancrage, ledit dispositif d'ancrage étant formé d'au moins un élément de renforcement circonférentiel de bourrelet (comme une tringle ou un ensemble de fils ou câbles enroulés circonférentiellement) et d'un coin en mélange de caoutchouc de dureté élevée et de forme sensiblement triangulaire. Ce coin est, vu en coupe dans un plan méridien (c'est-à-dire contenant l'axe de rotation du pneumatique), limité par une face latérale radialement extérieure et une face radialement intérieure et enfin une face reliant les deux faces précédentes et située axialement à l'extérieur, de façon que le sommet du coin opposé à ladite face latérale soit situé radialement vers l'intérieur de l'élément de renforcement circonférentiel de bourrelet. L'armature de carcasse est ancrée à chacune de ses extrémités sur ledit dispositif d'ancrage au moyen d'un retournement qui s'enroule, au moins partiellement, autour de l'élément de renforcement circonférentiel de bourrelet et se prolonge dans ou autour du coin en mélange de caoutchouc de dureté élevée.

11 a été constaté que ce type d'ensemble pneumatique pouvait présenter des pertes de pression interne se produisant de façon progressive. Bien que ces ensembles pneumatiques soient prévus pour rouler à pression faible voire nulle de façon relativement exceptionnelle, il est toutefois essentiel qu'ils soient correctement gonflés en condition normale d'usage. Un roulage prolongé au delà d'une certaine limite conduit à des endommagements de la structure du pneumatique qui peuvent empêcher son utilisation après regonflage à pression nominale.

Ces pertes de pression de gonflage semblent être la conséquence des mouvements des bourrelets du pneumatique par rapport à la jante de montage à chaque tour de roue lorsque le pneumatique est sollicité en virage.

Dans l'état de la technique, on connaissait des difficultés de montage de pneumatique sur leur jante de montage et notamment la difficulté de réaliser une étanchéité primaire permettant ensuite de gonfler le pneumatique. Le document japonais 02-241808 décrit notamment un bourrelet de pneumatique comprenant deux nervures sur le siège dudit bourrelet pour venir en contact à l'état initial et assurer cette étanchéité primaire. Ce document ne précise pas la position par rapport à la structure même du bourrelet ni les pressions de contact permettant d'avoir la solution au problème des pertes de pression de gonflage pendant le roulage. Comme dans le document WO 00 06399, les reliefs disposés sur les sièges de bourrelet sont mis sous la tringle de bourrelet. Il est clair que dans le cas qui nous intéresse, il est essentiel de noter que le pneumatique dont les sièges de bourrelet sont inclinés vers l'extérieur n'a rien à voir avec les pneumatiques de l'art antérieur tels que décrits dans les documents qui viennent d'être cités, notamment la mise en place des bourrelets par des moyens mécaniques - décrite dans le brevet US 5836366 - fait que le bourrelet est en contact avec la jante dès ladite mise en place et donc que le gonflage est possible.

L'invention a pour but de proposer une solution permettant d'éviter les pertes de pression de gonflage pendant le roulage d'un ensemble pneumatique tel que décrit plus haut.

Le pneumatique, selon l'invention, comprend :
- deux bourrelets dont au moins un bourrelet a un siège de bourrelet incliné vers l'extérieur, c'est-à-dire tel que, par rapport à l'axe de rotation du pneumatique, les points dudit siège axialement les plus à l'intérieur du pneumatique sont plus éloignés de l'axe de rotation que les points du même siège axialement les plus à l'extérieur du pneumatique, ce siège étant prolongé axialement et radialement vers l'extérieur par une partie latérale, la liaison entre cette partie latérale et le siège étant faite par une partie de raccordement, ce bourrelet comprenant un dispositif d'ancrage formé d'au moins un élément de renforcement circonférentiel de bourrelet et d'un profilé en forme de coin en matériau caoutchoutique de rigidité élevée (c'est-à-dire ayant un module à 10% de déformation au moins égal à 25 MPa) et de forme sensiblement triangulaire délimité par une face radialement à l'extérieur, une face radialement à l'intérieur et une face latérale axialement à l'extérieur reliant les deux précédentes faces et le sommet à l'opposé de la face axialement à l'extérieur du profilé étant situé radialement sous l'élément de renforcement circonférentiel de bourrelet,
- une armature de carcasse radiale constituée d'un matériau caoutchoutique renforcé d'une pluralité de renforts (fils, câbles) faisant, dans le pneumatique, un angle égal ou proche de 90° avec la direction circonférentielle, cette armature de carcasse étant ancrée dans chaque bourrelet présentant un siège incliné vers l'extérieur à l'élément de renforcement circonférentiel en passant radialement à l'intérieur dudit élément et en allant de l'intérieur vers l'extérieur du pneumatique pour former un retournement s'étendant sur ou dans le coin en mélange de caoutchouc,
- ce pneumatique est caractérisé en ce que le siège de bourrelet incliné vers l'extérieur comprend au moins une nervure continue circonférentiellement et faisant au moins un tour complet, ladite au moins une nervure étant située axialement à l'extérieur d'un plan perpendiculaire à l'axe de rotation du pneumatique et tangent axialement à l'extérieur de l'élément de renforcement circonférentiel de bourrelet pour créer une ligne continue de pression de contact égale ou supérieure à la pression de gonflage du pneumatique.

Le siège du bourrelet du pneumatique selon l'invention correspond à la partie du bourrelet qui est destinée à venir en contact avec le siège d'une jante de montage à l'exception des rebords de ladite jante ; c'est en général, la partie radialement à l'intérieur de l'élément de renforcement circonférentiel de bourrelet (communément appelée "tringle de bourrelet"). Ce siège de bourrelet est prolongé axialement de part et d'autre par des parties latérales pouvant venir en contact avec des rebords de jante.

Par nervure continue, on entend ici une surépaisseur formée de façon continue dans la direction circonférentielle sur le profil du siège de bourrelet, ladite surépaisseur ayant une largeur à la base au moins égale à 0.5 mm et une hauteur par rapport au siège au moins égale à 0.1 mm. Préférentiellement, la largeur à la base d'une telle nervure est au plus égale à 3. mm afin de servir de point de pivotement aux mouvements cycliques du bourrelet. Préférentiellement la hauteur d'une telle nervure est telle que le montage du pneumatique sur sa jante ne s'en trouve pas trop affecté : pour les dimensions de pneumatique de tourisme, une hauteur maximale de l'ordre du millimètre est préférée. Les propriétés mécaniques des matériaux constitutifs de bourrelet ont une incidence sur la hauteur minimale de la nervure : en effet, pour un premier matériau de dureté inférieure à celle d'un deuxième matériau, il sera nécessaire de prévoir une hauteur de nervure supérieure.

Préférentiellement, la nervure formée sur l'un au moins des bourrelets est axialement positionnée, par rapport au plan perpendiculaire à l'axe de rotation du pneumatique et tangent axialement à l'extérieur de l'élément de renforcement circonférentiel de bourrelet, à au moins une distance égale à la moitié de la distance entre ledit plan perpendiculaire à l'axe de rotation et la partie latérale axialement à l'extérieur du bourrelet destinée à venir en contact avec le hump de la jante. Par hump on entend la partie axialement à l'extérieur de la jante de montage du pneumatique selon l'invention.

De préférence, le profil méridien (c'est-à-dire dans un plan de coupe contenant l'axe de rotation) de la nervure est de forme triangulaire ou rectangulaire. Une autre forme intéressante est une forme circulaire tronquée.

Une variante possible consiste à renforcer la nervure prévue sur le siège d'un bourrelet par un renfort disposé dans la direction circonférentielle ; ce renfort (câble, fil métal ou textile) peut être continu ou discontinu. La présence de ce renfort permet de pérenniser la présence de la nervure en évitant notamment le fluage du matériau caoutchoutique sous l'action des pressions de contact contre la jante. Une autre variante consiste à réaliser la nervure dans un matériau élastomère de rigidité appropriée.

Préférentiellement, la nervure continue n'est pas située dans la partie de raccordement entre le siège de bourrelet et la partie latérale dudit bourrelet de manière à être assurément en contact avec le siège de la jante dans les conditions usuelles d'usage et notamment en virage.

Une autre variante consiste à prévoir la présence de cette nervure uniquement sur le bourrelet destiné à être placé à l'extérieur du véhicule.

L'invention concerne également une jante dont au moins un siège de jante est incliné vers l'extérieur selon la définition donnée plus haut. En effet, dans ce cas la jante comprend un siège de jante dont les points axialement les plus à l'extérieur sont situés à une distance de l'axe de rotation qui est inférieure à la distance des points dudit siège axialement les plus à l'intérieur. Cette jante comprend en outre axialement à l'extérieur dudit siège incliné vers l'extérieur une partie formant saillie (ou "hump" en anglais), une partie de raccordement reliant ledit siège de jante à ladite saillie. La jante selon l'invention comprend au moins une nervure continue et s'étendant dans la direction circonférentielle, cette nervure formant un relief sur le siège de jante et étant placée de façon à se trouver axialement à l'extérieur par rapport à la moitié de la largeur dudit siège de jante. Le profil de nervure en coupe transversale est préférentiellement soit une forme triangulaire soit un forme rectangulaire soit une forme circulaire tronquée.

De préférence, au moins une nervure ne se trouve pas dans la partie de raccordement entre le siège de jante et la saillie ou hump. Cette nervure de largeur à la base au moins égale à 0.5 mm et au plus égale à 3 mm et de hauteur au moins égale à 0.1 mm et au plus égale à 3 mm peut être réalisée soit au moment de la fabrication de la jante soit après par apport de matière par exemple. L'avantage d'une jante selon l'invention, outre l'effet bénéfique sur le maintien de la pression de gonflage, est qu'elle permet l'emploi de pneumatiques dont les bourrelets ne comportent pas de nervure circonférentielle continue, et notamment les pneumatiques commercialisés avant mise en oeuvre de la présente invention.

L'invention concerne également un ensemble pneumatique comprenant un pneumatique dont au moins un bourrelet a un siège de bourrelet incliné vers l'extérieur et une jante dont au moins un siège est incliné vers l'extérieur pour recevoir ledit bourrelet du pneumatique, cet ensemble pneumatique étant caractérisé en ce qu'il comprend un moyen pour créer une ligne continue circonférentiellement de pression de contact entre le siège de bourrelet et le siège de la jante, cette pression étant au moins égale à la pression de gonflage du pneumatique.

Les caractéristiques de l'invention seront mieux comprises à l'aide des dessins, annexés à la description qui suit, illustrant à titre non limitatif des exemples de réalisation de l'invention. Ces dessins comprennent :
- La figure 1 montrant, vues en coupe méridienne et en superposition, un bourrelet de pneumatique selon l'art antérieur dans une configuration de virage ;
- La figure 2 montrant une vue en coupe méridienne d'une première variante d'un bourrelet de pneumatique selon l'invention, ce bourrelet comportant une nervure continue sur son siège ;
- La figure 3 montrant un relevé des pressions de contact entre un bourrelet de pneumatique selon l'invention et sa jante de montage ;
- La figure 4 montrant vue en coupe méridienne d'une autre variante de réalisation de bourrelet, l'une des nervures étant renforcée par un fil textile continu.

Pour en faciliter la lecture, la description qui suit emploie les mêmes signes de référence pour désigner des éléments semblables dès lors que ces signes de référence désignent des éléments identiques au moins dans leur fonction.

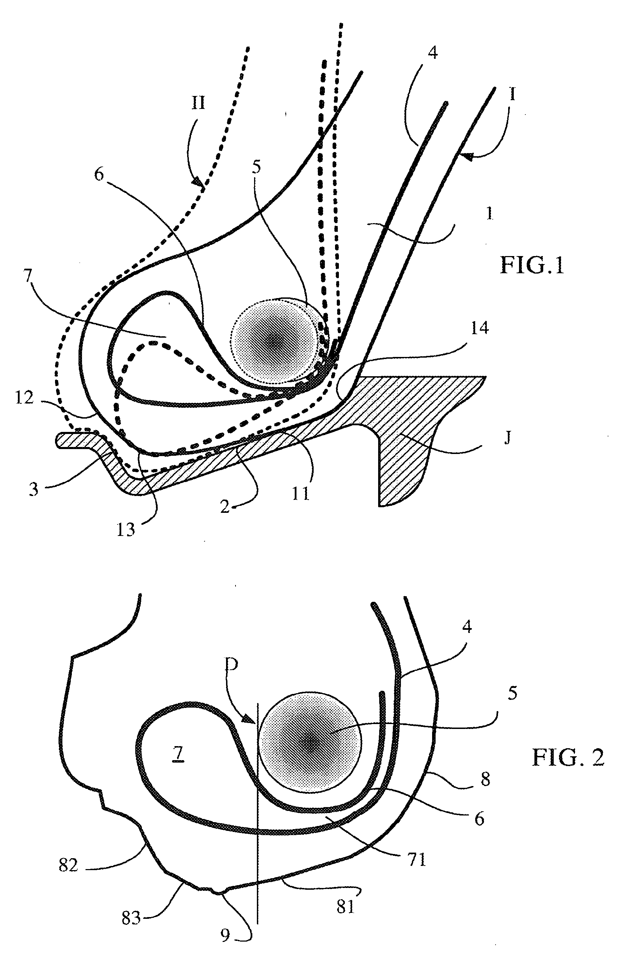

La figure 1 montre, vue en coupe méridienne, et sur un véhicule en condition de roulage et de virage vers la droite par rapport au sens d'avancement dudit véhicule, les changements de géométrie d'un bourrelet de l'art antérieur. La position choisie correspond à celle du bourrelet extérieur par rapport au véhicule pour le pneumatique situé en position avant gauche.

Par vue en coupe méridienne, on entend ici que la figure est réalisée dans un plan de coupe comprenant l'axe de rotation du pneumatique. De même, on entend par "radialement à l'intérieur d'un élément" une position localisée entre ledit élément et l'axe de rotation du pneumatique, et par "axialement à l'intérieur" une position située du côté de la cavité limitant la pression de gonflage du pneumatique.

Sur la figure 1, on voit un siège 2 de jante J incliné vers l'extérieur (c'est-à-dire dont les points axialement les plus à l'extérieur sont sur un cercle de diamètre inférieur au cercle sur lesquels se trouvent les points axialement les plus à l'intérieur) selon un angle d'environ 15° par rapport à l'axe de rotation. Ce siège 2 est prolongé axialement à l'extérieur par une saillie 3 ou "hump" destinée à maintenir en place un bourrelet de pneumatique en cas de roulage à pression faible voire nulle. Le siège est relié à la saillie par une partie de raccordement ayant la forme d'un arc de cercle se raccordant tangentiellement au siège et à la saillie. La jante comprend un autre siège de même type mais ayant un diamètre différent.

Sur ce siège 2 est monté un bourrelet 1 d'un pneumatique comprenant une armature de carcasse 4 enroulée partiellement autour d'une tringle 5 de bourrelet pour former un retournement 6. La tringle 5 peut être une tringle de type tressé, c'est-à-dire une tringle formée d'une âme autour de laquelle sont enroulés un(des) fil(s) ou câble(s) sur une ou plusieurs couches. De façon équivalente, la tringle peut être remplacée par une pluralité de câbles enroulés circonférentiellement et disposés d'un même côté ou bien de part et d'autre de l'armature de carcasse comme cela est décrit, par exemple, dans la demande WO01/39999.

Le bourrelet 1 comprend un siège 11 destiné à venir en contact sur un siège 2 de jante de montage, ledit siège 11 de bourrelet prolongé axialement et radialement à l'extérieur par une partie latérale 12 elle même reliée audit siège par une partie de raccordement 13.

La dimension du pneumatique dont le bourrelet est montré est un 245-690 R 500 A et la dimension de la jante de montage : 235x500.

Le dessin réalisé en traits continus correspond à une coupe méridienne du bourrelet dans la région du pneumatique en contact avec la chaussée (position à la verticale du centre roue). Le dessin réalisé en traits discontinus correspond à une coupe méridienne du même bourrelet dans la région du pneumatique diamétralement opposée à la coupe réalisée en traits pleins (opposé de l'aire de contact).

En examinant ces deux tracés, on observe qu'un même bourrelet est fortement sollicité en virage au point de basculer d'une position I vers une position II. Dans la position I (bourrelet dessiné en traits pleins) le bourrelet 1 est fortement fléchi vers l'intérieur du pneumatique au point que la partie axialement à l'extérieur du siège 11 de bourrelet et la partie latérale 12 dudit bourrelet ne sont plus en contact avec la jante J, où s'ils le sont encore c'est avec des pressions de contact très faibles (c'est-à-dire inférieures à la pression de gonflage). Dans la position II (tracé en traits discontinus), le bourrelet 1 est ici fortement fléchi vers l'extérieur du pneumatique au point que c'est la partie 14 axialement à l'intérieur du siège de bourrelet qui n'est pratiquement plus en contact avec la jante J.

Ces cycles de flexion des bourrelets sur leurs sièges à chaque tour de roue semblent être à l'origine des pertes progressives de pression de gonflage du pneumatique.

La figure 2 montre une coupe méridienne d'un bourrelet 1 d'un pneumatique selon l'invention et de même dimension que celui représenté avec la figure 1. Ce bourrelet 1 permet de réduire très sensiblement les pertes de pression dans le pneumatique en cours de roulage et plus particulièrement en virage.

Le bourrelet 1 représenté à la figure 2 comprend une tringle 5 formant armature circonférentielle de renforcement de bourrelet autour de laquelle est partiellement enroulée une armature de carcasse radiale 4 (c'est-à-dire une armature dont les renforts font un angle proche de ou égal à 90° avec la direction circonférentielle). Cette armature de carcasse 4 comprend un retournement 6 faisant le tour d'un profilé 7 en forme de coin de mélange de caoutchouc, une pointe 71 dudit profilé 7 s'engageant radialement sous la tringle 5 de bourrelet.

Vu en coupe méridienne, le profil géométrique externe 8 de ce bourrelet comprend un siège 81 de bourrelet destiné à venir en contact avec le siège d'une jante de montage, une partie latérale 82 destinée à venir en contact avec une saillie (ou hump) axialement à l'extérieur du siège de jante, et un profil de raccordement 83 reliant le siège de bourrelet à ladite partie latérale. Selon l'invention, le siège 81 de bourrelet est pourvu d'une nervure 9 en relief (c'est-à-dire faisant saillie radialement vers l'intérieur du siège 81) continue dans le sens circonférentiel de manière à assurer une ligne continue de pression supérieure à la pression de gonflage interne du pneumatique.

En outre, cette nervure est placée sur le siège de bourrelet 81 axialement à l'extérieur d'une droite D perpendiculaire à l'axe de rotation du pneumatique et tangente axialement à l'extérieur de la tringle 5 de bourrelet de manière à être effectivement toujours en contact avec le siège de jante dans les mouvements de flexion observés notamment en virage.

Par ligne continue de pression, il faut comprendre ici qu'il existe au moins une position sur le siège de bourrelet telle que la pression de contact en ce point entre le bourrelet et la jante au tour de roue reste égale ou supérieure à la pression de gonflage, ceci dans des conditions usuelles de roulage en virage.

Les dimensions de cette nervure sont les suivantes : largeur à la base environ 1 mm, distance maximale par rapport au siège environ 0.3 mm. Dans le plan de coupe méridien, le profil de cette nervure 9 reproduit sensiblement celui d'un arc de cercle.

Le matériau en contact avec la jante, et constituant entre autre la nervure 9, a un module d'extension à 10% d'extension égal à 12 MPa.

De cette manière, il est permis de maintenir une région du siège de bourrelet en contact permanent avec le siège de la jante avec une pression de contact appropriée et cela quelles que soient les conditions de roulage, avec une pression de contact suffisante entre le bourrelet et la jante pour assurer une étanchéité satisfaisante et permettre la résolution du problème présenté en introduction.

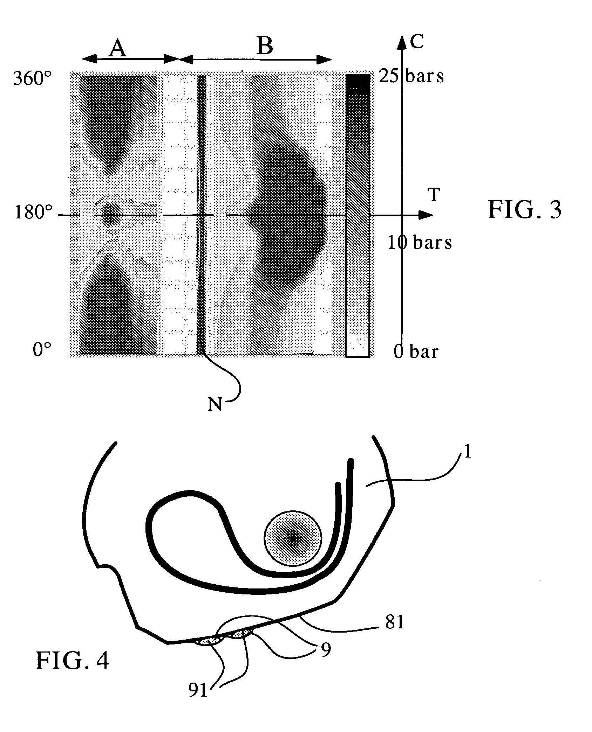

Ces résultats sont confirmés par les tests sur véhicule comme le montre la figure 3 présentant un relevé des pressions de contact entre un bourrelet 1 selon l'invention tel que montré à la figure 2 et sa jante de montage J. La partie repérée A est afférente au relevé des pressions de contact de la partie latérale 82 de bourrelet contre la saillie 3 de la jante J et la partie repérée B est afférente au relevé des pressions de contact du siège de bourrelet 81 contre le siège 2 de la jante J. Les relevés de mesure sont réalisés sur un tour complet sur le bourrelet situé côté extérieur d'un véhicule (essieu avant) dans les conditions de roulage suivantes : vitesse stabilisée égale à 70 km/ et en configuration de virage équivalente à une accélération transversale sensiblement constante et égale à 1 g (c'est-à-dire égale à 9.81 m/s²). La figure 3 montre en tout point du profil de bourrelet (siège et partie latérale) les pressions de contact au tour de roue c'est-à-dire sur 360° (la direction repérée par la lettre C indique précisément ce tour de roue). Une échelle de couleur des pressions de contact est donnée sur la partie droite entre 0 et 25 bars. La partie médiane (repérée par la lettre T) du relevé correspond à une position dans le contact correspondant sensiblement au milieu de l'empreinte de contact du pneumatique avec le sol. Les pressions de contact visualisées par des couleurs sombres sont très supérieures à la pression de gonflage du pneumatique, tandis que des pressions visualisées par des couleurs claires (voire blanches) sont inférieures à ladite pression de gonflage.

Sur ce relevé, on constate qu'il existe une très grande amplitude des pressions de contact dans une partie du siège de bourrelet proche du raccordement entre ledit siège et la partie latérale de bourrelet. Cette très forte variation de pression de contact est créée par le mouvement de basculement du bourrelet sur sa jante. On constate également que la présence de la nervure continue permet de maintenir une ligne continue de pression de contact ne présentant pas une amplitude de variation comparable à celle observée sur les autres points du siège de bourrelet, cette pression de contact étant ici supérieure à dix fois la pression de gonflage (égale ici à 2.5 bars). On constate par ailleurs que certaines régions du bourrelet du pneumatique ne présente pas de pression de contact avec la jante, notamment la partie de raccordement entre le siège de bourrelet et la partie latérale dudit bourrelet.

Préférentiellement les pneumatiques tels que décrits et comportant au moins une nervure sont placés sur un véhicule de manière à ce que les nervures soient situées axialement à l'extérieur dudit véhicule.

Dans une autre variante de mise en oeuvre de l'invention, montrée avec la figure 4, le bourrelet est pourvu sur au moins un de ses sièges avec au moins une nervure (dans le cas présent : deux nervures 9), chaque nervure 9 étant renforcée par un élément de renfort 91 pouvant se présenter sous la forme d'un fil ou d'un assemblage de plusieurs fils disposés dans la direction circonférentielle. Ces éléments de renfort 91 ont préférentiellement une rigidité supérieure à celle du mélange de caoutchouc de la nervure 9 afin de résister au fluage, c'est-à-dire à une diminution progressive avec le temps de l'épaisseur de ladite nervure avec pour conséquence une réduction sensible de la pression de contact entre ladite nervure et le siège de jante. Dans une autre variante non représentée, les éléments de renfort 91 peuvent être discontinus dans le sens circonférentiel. Ces éléments 91 peuvent être choisis parmi des matériaux textiles, plastiques ou métalliques.

L'invention n'est pas limitée aux exemples décrits et représentés et diverses modifications peuvent y être apportées sans sortir du cadre défini par les revendications annexées. En particulier, un pneumatique comprenant au moins un bourrelet pourvu d'au moins une nervure continue sur au moins un de ses sièges peut être monté sur une jante dont au moins un siège de jante est pourvu lui aussi d'au moins une nervure (dans ce cas, il peut être préférable que les nervures soient décalées).

## Revendications

1. Pneumatique prévu pour être gonflé à une pression de gonflage d'utilisation et comprenant :
- deux bourrelets dont au moins un bourrelet (1) a un siège (11) de bourrelet incliné vers l'extérieur, c'est-à-dire tel que, par rapport à l'axe de rotation du pneumatique, les points dudit siège (11) axialement les plus à l'intérieur du pneumatique sont plus éloignés de l'axe de rotation que les points du même siège (11) axialement les plus à l'extérieur du pneumatique, ce bourrelet(1) comprenant un dispositif d'ancrage formé d'au moins un élément de renforcement circonférentiel de bourrelet (5) et d'un profilé (7) en mélange de caoutchouc de rigidité élevée et de forme sensiblement triangulaire délimité par une face radialement à l'extérieur, une face radialement à l'intérieur et une face latérale axialement à l'extérieur reliant les deux précédentes faces et la pointe (71) à l'opposé de la face axialement à l'extérieur du profilé étant située radialement à l'intérieur de l'élément de renforcement circonférentiel (5) de bourrelet,
- une armature de carcasse radiale (4) constituée d'un mélange de caoutchouc renforcé d'une pluralité de renforts (fils, câbles) faisant, dans le pneumatique, un angle égal ou proche de 90° avec la direction circonférentielle, cette armature de carcasse (4) étant ancrée dans chaque bourrelet (1), présentant un siège (11) incliné vers l'extérieur, à un dispositif d'ancrage en passant radialement à l'intérieur de l'élément de renforcement circonférentiel de bourrelet et en allant de l'intérieur vers l'extérieur du pneumatique pour former un retournement (6) s'étendant sur ou dans le profilé (7) en mélange de caoutchouc,
ce pneumatique étant **caractérisé en ce qu'**au moins un siège de bourrelet (11) comprend au moins une nervure (9) continue circonférentiellement et faisant au moins un tour complet, ladite au moins une nervure (9) étant située axialement à l'extérieur d'un plan perpendiculaire à l'axe de rotation du pneumatique et tangent axialement à l'extérieur à l'élément de renforcement circonférentiel (5) du bourrelet pour créer une ligne continue de pression de contact, entre le siège de bourrelet et le siège de jante, égale ou supérieure à la pression de gonflage du pneumatique.

2. Pneumatique selon la revendication 1 **caractérisé en ce que** la largeur de la base de la nervure 9 est au moins égale à 0.5 mm et au plus égale à 3.0 mm, la hauteur de la nervure (9) par rapport au siège au moins égale à 0.1 mm et au plus égale à 1.0 mm.

3. Pneumatique selon l'une des revendications 1 ou 2 **caractérisé en ce que** la nervure formée sur l'un au moins des bourrelets est axialement positionnée, par rapport au plan perpendiculaire à l'axe de rotation du pneumatique et tangent axialement à l'extérieur de l'élément de renforcement circonférentiel de bourrelet, à au moins une distance égale à la moitié de la distance entre ledit plan perpendiculaire à l'axe de rotation et la partie latérale axialement à l'extérieur du bourrelet destinée à venir en contact avec le hump de la jante.

4. Pneumatique selon l'une des revendications 1 à 3 **caractérisé en ce qu'**au moins une nervure (9) continue est renforcée par un renfort circonférentiel (91) disposé dans ladite nervure.

5. Pneumatique selon la revendication 4 **caractérisé en ce que** le renfort circonférentiel (91) est discontinu dans la direction circonférentielle.

6. Pneumatique selon l'une des revendications 1 à 5 **caractérisé en ce que** le profil méridien de la nervure (9) est rectangulaire.

7. Pneumatique selon l'une des revendications 1 à 6 **caractérisé en ce qu'**au moins une nervure (9) est positionnée de manière à être axialement à l'extérieur d'un véhicule quand ledit pneumatique est monté sur ledit véhicule.

## Claims

1. A tire intended to be inflated to an operating inflation pressure and comprising:
- two beads, at least one bead (1) of which has an outwardly inclined bead seat (11), that is to say such that, relative to the axis of rotation of the tire, those points of said seat (11) that are axially furthest toward the inside of the tire are further from the axis of rotation than those points of the same seat (11) that are axially furthest to the outside of the tire, this bead (1) comprising an anchoring device formed from at least one circumferential bead reinforcing element (5) and from a profiled element (7) made of a rubber compound of high stiffness and having a substantially triangular shape bounded by a radially external face, a radially internal face and an axially external lateral face joining the previous two faces and the tip (71) on the opposite side from the axially external face of the profiled element being located radially internal to the circumferential bead reinforcing element (5);
- a radial carcass reinforcement (4) consisting of a rubber compound reinforced by a plurality of reinforcements (yams, cables) making, in the tire, an angle equal to or close to 90° to the circumferential direction, this carcass reinforcement (4) being anchored in each bead (1), having an outwardly inclined seat (11), with an anchoring device passing radially to the inside of the circumferential bead reinforcing element and going from the inside of the tire toward the outside in order to form an upturn (6) that extends over or in the profiled element (7) of rubber compound,
this tire being **characterized in that** at least one bead seat (11) includes at least one circumferentially continuous rib (9) making at least one complete revolution, said at least one rib (9) being located axially to the outside of a plane perpendicular to the axis of rotation of the tire and axially tangential to the outside of the circumferential bead reinforcing element (5) in order to create a continuous line of contact pressure, between the bead seat and the rim seat, equal to or greater than the inflation pressure of the tire.

2. The tire as claimed in claim 1, **characterized in that** the width of the base of the rib (9) is at least 0.5 mm and at most 3.0 mm, and the height of the rib (9) relative to the seat is at least 0.1 mm and at most 1.0 mm.

3. The tire as claimed in either of claims 1 and 2, **characterized in that** the rib formed on at least one of the beads is axially positioned, relative to the plane perpendicular to the axis of rotation of the tire and axially tangential to the outside of the circumferential bead reinforcing element, at least at a distance equal to half the distance between said plane perpendicular to the axis of rotation and that axially external lateral part of the bead which is intended to come into contact with the hump of the rim.

4. The tire as claimed in one of claims 1 to 3, **characterized in that** at least one continuous rib (9) is reinforced by a circumferential reinforcement (91) placed in said rib.

5. The tire as claimed in claim 4, **characterized in that** the circumferential reinforcement (91) is discontinuous in the circumferential direction.

6. The tire as claimed in one of claims 1 to 5, **characterized in that** the meridian profile of the rib (9) is rectangular.

7. The tire as claimed in one of claims 1 to 6, **characterized in that** at least one rib (9) is positioned so as to be axially to the outside of a vehicle when said tire is fitted onto said vehicle.

## Patentansprüche

1. Luftreifen, der vorgesehen ist, um auf einen Betriebsluftdruck aufgepumpt zu werden und der Folgendes aufweist:
- zwei Wülste, von denen mindestens ein Wulst (1) einen nach außen geneigten Wulstsitz (11) hat, d.h. derart, dass bezüglich der Drehachse des Luftreifens die axial am weitesten auf der Innenseite des Luftreifens liegenden Punkte des Sitzes (11) weiter von der Drehachse entfernt sind als die axial am weitesten auf der Außenseite des Luftreifens liegenden Punkte des gleichen Sitzes (11), wobei dieser Wulst (1) eine Verankerungsvorrichtung aufweist, die von mindestens einem Wulstumfangsverstärkungselement (5) und von einem Profilteil (7) aus einer Kautschukmischung mit hoher Steifigkeit und im Wesentlichen von Dreiecksform gebildet wird, das von einer radial außen liegenden Seite, von einer radial innen liegenden Seite und von einer axial außen liegenden Seitenfläche begrenzt wird, die die zwei vorhergehenden Seiten verbindet, und die Spitze (71) gegenüber der axial außen liegenden Seite des Profilteils sich radial auf der Innenseite des Wulstumfangsverstärkungselements (5) befindet,
- eine aus einer mit mehreren Verstärkungen (Drähte, Korde) verstärkten Kautschukmischung bestehende radiale Karkassenbewehrung (4), die im Luftreifen einen Winkel gleich oder nahe 90° mit der Umfangsrichtung bildet, wobei diese Karkassenbewehrung (4) in jedem einen nach außen geneigten Sitz (11) aufweisenden Wulst (1) an einer Verankerungsvorrichtung verankert ist, indem sie radial an der Innenseite des Wulstumfangsverstärkungselements verläuft und indem sie von der Innen- zur Außenseite des Luftreifens geht, um einen Umschlag (6) zu bilden, der sich über oder in dem Profilteil (7) aus Kautschukmischung erstreckt,
wobei dieser Luftreifen **dadurch gekennzeichnet ist, dass** mindestens ein Wulstsitz (11) mindestens eine in Umfangsrichtung durchgehende und mindestens einmal ganz umlaufende Rippe (9) aufweist, wobei die mindestens eine Rippe (9) sich axial auf der Außenseite einer lotrecht zur Drehachse des Luftreifens verlaufenden und axial außen das Umfangsverstärkungselement (5) des Wulsts tangierenden Ebene befindet, um eine durchgehende Linie des Kontaktdrucks zwischen dem Wulstsitz und dem Felgensitz zu erzeugen, der gleich dem oder höher als der Luftdruck des Luftreifens ist.

2. Luftreifen nach Anspruch 1, **dadurch gekennzeichnet, dass** die Breite der Basis der Rippe (9) mindestens gleich 0,5 mm und höchstens gleich 3,0 mm ist, während die Höhe der Rippe (9) bezüglich des Sitzes mindestens gleich 0,1 mm und höchstens gleich 1,0 mm ist.

3. Luftreifen nach einem der Ansprüche 1 oder 2, **dadurch gekennzeichnet, dass** die auf mindestens einem der Wülste geformte Rippe axial bezüglich der zur Drehachse des Luftreifens lotrechten und axial außen das Wulstumfangsverstärkungselement tangierenden Ebene in mindestens einem Abstand gleich der Hälfte des Abstands zwischen der zur Drehachse lotrechten Ebene und dem axial außen liegenden Seitenbereich des Wulsts positioniert ist, der dazu bestimmt ist, mit dem Hump der Felge in Kontakt zu kommen.

4. Luftreifen nach einem der Ansprüche 1 bis 3, **dadurch gekennzeichnet, dass** mindestens eine durchgehende Rippe (9) durch eine Umfangsverstärkung (91) verstärkt wird, die in der Rippe angeordnet ist.

5. Luftreifen nach Anspruch 4, **dadurch gekennzeichnet, dass** die Umfangsverstärkung (91) in der Umfangsrichtung unterbrochen ist.

6. Luftreifen nach einem der Ansprüche 1 bis 5, **dadurch gekennzeichnet, dass** das Meridianprofil der Rippe (9) rechteckig ist.

7. Luftreifen nach einem der Ansprüche 1 bis 6, **dadurch gekennzeichnet, dass** mindestens eine Rippe (9) so positioniert ist, dass sie sich axial an der Außenseite eines Fahrzeugs befindet, wenn der Luftreifen auf das Fahrzeug montiert ist.
